# EUROPÄISCHE PATENTSCHRIFT

(11) **EP 2 285 263 B1**
(45) Veröffentlichungstag und Bekanntmachung des Hinweises auf die Patenterteilung: **23.12.2015**
(21) Anmeldenummer: 09731315.9
(22) Anmeldetag: 08.04.2009
(51) Int. Cl.: A47K 3/30

(54) **DEKORPROFIL UND VERFAHREN ZUR HERSTELLUNG EINES DEKORPROFILS AN DEM WENIGSTENS EIN FUNKTIONSELEMENT ANGEBRACHT IST**
DECOR PROFILE AND METHOD FOR PRODUCING A DECOR PROFILE TO WHICH AT LEAST ONE FUNCTIONAL ELEMENT IS FIXED
PROFILE DECORATIF ET PROCEDE DE PRODUCTION D'UN PROFILE DECORATIF SUR LEQUEL EST APPLIQUE AU MOINS UN ELEMENT FONCTIONNEL

(30) Priorität: 09.04.2008 DE 102008017851
(43) Veröffentlichungstag der Anmeldung: 23.02.2011
(73) Patentinhaber: Rehau AG + Co, 95111 Rehau (DE)
(72) Erfinder: SCHADHAUSER, Günther, 90768 Fürth (DE); ENGELHARDT, Dieter, 95179 Geroldsgrün (DE); HERMANN, Andreas, 95111 Rehau (DE)
(86) Internationale Anmeldenummer: PCT/EP2009/002601
(87) Internationale Veröffentlichungsnummer: WO 2009/124744

(56) Entgegenhaltungen:
- EP-A2- 1 700 971
- DE-A1- 3 315 485
- DE-C1- 19 705 617
- DE-U1- 29 618 634

## Beschreibung

### Hintergrund der Erfindung

Die Erfindung betrifft ein Verfahren zur Herstellung eines Dekorprofils, an dem wenigstens ein Funktionselement angebracht ist, und ein Duschkabinen-Dekorprofil.

Bei bekannten Verfahren zur Herstellung von Dekorprofilen, wie beispielsweise Dekorprofilen für Duschkabinen, an denen Funktionselemente, wie beispielsweise Dichtlippen angebracht sind, wird die Sichtseite einer Dekorfolie, mit einem Träger, wie beispielsweise einer Deckschicht, in Kontakt gebracht und mit dieser verbunden. Hierbei besteht die Deckschicht meist aus Kunststoffmaterial, wobei zur Bildung der Deckschicht das Kunststoffmaterial der Deckschicht meist in flüssiger Form auf die Sichtseite der Dekorfolie aufgespritzt wird. Die Deckschicht ist hierbei neben der Bereitstellung einer erforderlichen mechanischen Stabilität insbesondere notwendig, um das Funktionselement an der Deckschicht anzubringen bzw. mit dieser zu verbinden. So kann gemäß dem Stand der Technik eine stoffschlüssige Verbindung zwischen dem Dekorprofil - umfassend Dekorfolie und Träger - und dem Funktionselement bereitgestellt werden. Eine direkte Verbindung des Funktionselements mit der Dekorfolie, die meist aus Metall besteht, ist fertigungstechnisch nur mit großem kostenintensiven Aufwand möglich und ist daher in der Regel nicht vorgesehen.

Da die Sichtseite der Dekorfolie gemäß dem Stand der Technik mit dem Träger, beispielsweise in Form einer durchsichtigen Dekorschicht aus Kunststoffmaterial, bedeckt ist, ergibt sich für einen Betrachter der Sichtseite der Dekorfolie eine gegenüber einem unbedeckten Zustand in ästhetischer Hinsicht eingeschränkte bzw. nachteilige Optik, da dem Sichtfeld des Betrachters eine Oberfläche bereitgestellt wird, die gegenüber dem unbedeckten Zustand verschwommen bzw. eingetrübt ausgebildet ist. Dies ist insbesondere dann der Fall, wenn zur Verbindung der Dekorfolie mit der Dekorschicht ein Haftlack erforderlich ist. Bekannte Lösungen ermöglichen dem Betrachter also keine visuelle Wahrnehmung bzw. Erfassung von echten Dekorfolienoberflächen, wie beispielsweise in Form von echten Aluminiumoberflächen bzw. echten Metalloberflächen.

Aus der EP 1 700 971 A2 ist ein Wandabschlussprofil bekannt, bei dem auf herkömmliche Weise Funktionselemente an einem Trägerprofil angeordnet werden. Die DE 296 18 634 U1 zeigt ein U-förmiges Einfassprofil für plattenartige Füllungen von Rahmenkonstruktionen. Die DE 33 14 485 A1 beschreibt eine Deckleiste für ein Wandabschlussprofil, die randseitig mit Dichtlippen versehen ist.

### Zugrundeliegende Aufgabe

Der Erfindung liegt daher die Aufgabe zugrunde, ein Verfahren anzugeben, mit dem ein Dekorprofil, an dem ein Funktionselement angebracht ist, hergestellt werden kann, bei dem die Sichtseite der Dekorfolie vom Betrachter ohne Zwischenschaltung von nachteiligen optischen Hindernissen betrachtet werden kann.

### Erfindungsgemäße Lösung

Diese Aufgabe wird erfindungsgemäß mit einem Verfahren zur Herstellung eines Dekorprofils, an dem wenigstens ein Funktionselement angebracht ist, gelöst, bei dem in einem ersten Schritt eine Rückseite wenigstens einer Dekorfolie aus Folienmaterial mit einem Träger aus Kunststoffmaterial in Kontakt gebracht und mit diesem flächig verbunden wird, in einem zweiten Schritt wenigstens ein zusammenhängendes Stück der Dekorfolie entfernt wird, um wenigstens einen von Folienmaterial unbedeckten Flächenbereich des Trägers auszubilden, und in einem dritten Schritt das Funktionselement an dem unbedeckten Flächenbereich angebracht wird.

Erfindungsgemäß erfolgt die Anbringung des Funktionselements, das beispielsweise ein Dichtelement aus Kunststoffmaterial sein kann, also an dem von Folienmaterial unbedeckten Flächenbereich des Trägers, der durch Entfernen eines Stücks der Dekorfolie ausgebildet wird. Der unbedeckte Flächenbereich grenzt hierbei an Flächenbereiche bzw. einen Flächenbereich des Trägers an, die/der mit der Dekorfolie bedeckt sind/ist, so dass das Funktionselement erfindungsgemäß an dem Träger angebracht werden kann ohne die Vorderseite bzw. Sichtseite der Dekorfolie mit dem Träger zu bedecken, einhergehend mit dem Vorteil, dass keine optische Beeinträchtigung durch ein optisches Hindernis beim Betrachten der Vorderseite bzw. der Sichtseite der Dekorfolie erfolgt. Eine durch Bedeckung der Sichtseite der Dekorfolie hervorgerufene, in ästhetischer Hinsicht eingeschränkte bzw. nachteilige optische Erscheinung der Sichtseite wird erfindungsgemäß vermieden.

Bei einer praktischen Weiterbildung des erfindungsgemäßen Verfahrens besteht das Funktionselement aus Kunststoffmaterial und weist eine Verbindungsfläche auf, wobei die Verbindungsfläche wenigstens abschnittsweise an den unbedeckten Flächenbereich angelegt wird, und wobei während des Anlegens der Verbindungsfläche wenigstens ein Abschnitt des Funktionselements, an dem die Verbindungsfläche ausgebildet ist, einen schmelzflüssigen Zustand aufweist, um das Funktionselement mit dem unbedeckten Flächenbereich stoffschlüssig zu verbinden.

Die Schaffung des schmelzflüssigen Zustands kann in bekannter Weise beispielsweise durch Erwärmung des Funktionselements erfolgen, wobei erfindungsgemäß nach Abkühlung des Funktionselements eine feste und stabile stoffschlüssige Verbindung zwischen dem Funktionselement und dem unbedeckten Flächenbereich besteht. Insbesondere kann das Funktionselement in Form eines schmelzflüssigen extrudierten Profils vorliegen, dessen Verbindungsfläche nach Formgebung über eine Düse einer Extrusionsanlage mit dem unbedeckten Flächenbereich wenigstens abschnittsweise in Kontakt gebracht wird bzw. an diesen angelegt wird. Ganz im Unterschied zu bekannten Verfahren zur Herstellung eines Dekorprofils, an dem ein Funktionselement angebracht ist, die in üblicher Weise unter Einsatz von Extrusionsanlagen bzw. Extrusionsverfahren durchgeführt werden, sind mit dem erfindungsgemäßen Verfahren eine Anzahl von Vorteilen verbunden, umfassend höhere Extrusionsleistungen, geringere Einstellzeiten, bessere Profilraumform, leichte Einstellarbeiten, höhere Produktionssicherheit, geringere Werkzeugkosten und kürzere Lieferzeiten.

Bevorzugt sind der unbedeckte Flächenbereich und die Verbindungsfläche länglich ausgebildet, wobei der unbedeckte Flächenbereich eine größte Breite aufweist, die kleiner oder größer ist als eine größte Breite der Verbindungsfläche oder dieser im Wesentlichen entspricht.

Durch ein geeignetes Entfernen wenigstens eines länglichen zusammenhängenden Stücks der Dekorfolie kann erfindungsgemäß ein länglich ausgebildeter unbedeckter Flächenbereich ausgebildet werden, so dass insbesondere länglich ausgebildete Funktionselemente mit länglich ausgebildeten Verbindungsflächen mit dem unbedeckten Flächenbereich verbunden werden können. Wenn hierbei der unbedeckte Flächenbereich eine größte Breite aufweist, die der größten Breite der Verbindungsfläche im Wesentlichen entspricht, kann - je nach Ausbildung des unbedeckten Flächenbereichs bzw. der Verbindungsfläche - das Funktionselement wenigstens abschnittsweise derart mit dem von Folienmaterial unbedeckten Flächenbereich verbunden werden, dass nur noch ein kleinflächiger sichtbarer Teilbereich des unbedeckten Flächenbereichs zwischen dem Folienmaterial und dem Funktionselement verbleibt, einhergehend mit der Schaffung einer für den Betrachter ästhetisch ansprechenden Optik, bei der das Funktionselement nahezu ohne sichtbare Zwischenbereiche an das Folienmaterial angrenzen kann. Besonders bevorzugt ist es, wenn der unbedeckte Flächenbereich und die Verbindungsfläche im Wesentlichen die gleiche Form aufweisen, so dass das Funktionselement derart mit dem von Folienmaterial unbedeckten Flächenbereich verbunden werden kann, dass kein oder nahezu kein sichtbarer Teilbereich des unbedeckten Flächenbereichs zwischen dem Folienmaterial und dem Funktionselement mehr verbleibt.

Ist die größte Breite des unbedeckten Flächenbereichs größer als eine größte Breite der Verbindungsfläche, kann das Funktionselement wenigstens abschnittsweise derart mit dem unbedeckten Flächenbereich verbunden werden, dass wenigstens ein Teilbereich des unbedeckten Flächenbereichs weiterhin frei verbleibt. Dieser Teilbereich kann erfindungsgemäß beispielsweise mit einem vorzugsweise anextrudierten Kunststoff-Element, wie beispielsweise einem anextrudierten Dekorstreifen, bedeckt bzw. aufgefüllt werden, das sich optisch von dem Folienmaterial bzw. der Dekorfolie abheben kann. Ist, im umgekehrten Fall, die größte Breite des unbedeckten Flächenbereichs kleiner als eine größte Breite der Verbindungsfläche, kann das Funktionselement wenigstens abschnittsweise derart mit dem unbedeckten Flächenbereich verbunden werden, dass es die an den unbedeckten Flächenbereich angrenzende Dekorfolie bzw. Folienmaterial bedeckt bzw. überlappt, einhergehend mit einem besonders guten Dichtungseffekt, insbesondere beim Einsatz eines als Dichtlippe bzw. Dichtelement ausgebildeten Funktionselements für ein Dekorprofil für Duschkabinen.

Bei einer besonders praktischen Weiterbildung des erfindungsgemäßen Verfahrens sind der unbedeckte Flächenbereich und die Verbindungsfläche im Wesentlichen eben und rechteckförmig ausgebildet, wobei der unbedeckte Flächenbereich eine Breite aufweist, die kleiner oder größer ist als die Breite der Verbindungsfläche oder dieser im Wesentlichen entspricht, und wobei nach dem Verbinden des Funktionselements mit dem unbedeckten Flächenbereich die Längsseite der Verbindungsfläche im Wesentlichen parallel zu der Längsseite des unbedeckten Flächenbereichs ist. Mittels dieser praktischen Weiterbildung können die obigen wenigstens abschnittsweise möglichen vorteilhaften Ausbildungen entlang der gesamten Längsseite der Verbindungsfläche bzw. des unbedeckten Flächenbereichs ausgebildet werden, einhergehend mit der Schaffung einer für den Betrachter ästhetisch ansprechenden Optik des Dekorprofils bei Betrachtung der Seite des Dekorprofils, an der sich die Dekorfolie bzw. das Folienmaterial befindet.

Erfindungsgemäß kann sich der unbedeckte Flächenbereich von einem Rand des Trägers bis zu einem anderen Rand der Trägers erstrecken, so dass insbesondere Funktionselemente in Form von Endlosprofilen unmittelbar nach Düsenformung in einer Extrusionsanlage geeignet an dem unbedeckten Flächenbereich angebracht bzw. mit diesem verbunden werden können, und zwar ohne hierbei Flächenbereiche, die mit Folienmaterial bedeckt sind, zu kontaktieren.

Bei einer vorteilhaften Weiterbildung des erfindungsgemäßen Verfahrens wird das Kunststoffmaterial des Trägers in flüssiger Form auf der Rückseite der Dekorfolie verteilt und anschließend ausgehärtet. Erfindungsgemäß kann so insbesondere ein schichtförmiger Träger geschaffen werden, der flächig mit der Rückseite der Dekorfolie bzw. mit Folienmaterial verbunden ist. Insbesondere kann das flüssige Kunststoffmaterial in praktischer Weise auf die Rückseite der Dekorfolie aufgespritzt werden. Insgesamt können so erfindungsgemäß insbesondere dünne streifenförmige Dekorprofile mit daran angebrachten Funktionselementen geschaffen werden, die vielfältig, insbesondere als Dekorprofile von Duschkabinen, verwendbar sind.

Die vorliegende Erfindung betrifft ferner ein Duschkabinen-Dekorprofil, an dem wenigstens ein Funktionselement angebracht ist, mit einem Träger aus Kunststoffmaterial, wobei der Träger an einer Sichtseite des Trägers eine zusammenhängende Trägerfläche aufweist, die wenigstens eine erste zusammenhängende Teilfläche aufweist, die mit einer Rückseite wenigstens einer Dekorfolie aus Folienmaterial flächig verbunden und mit der Dekorfolie bedeckt ist, und wenigstens eine zweite zusammenhängende Teilfläche aufweist, die von Folienmaterial unbedeckt ist, und wobei das Funktionselement an der zweiten Teilfläche angebracht ist.

Bei dem erfindungsgemäßen Duschkabinen-Dekorprofil, das vorzugsweise durch das erfindungsgemäße Verfahren, insbesondere durch ein erfindungsgemäßes Verfahren nach einem der Ansprüche 1 bis 6, hergestellt werden kann, bilden die erste zusammenhängende Teilfläche und die zweite zusammenhängende Teilfläche zusammen bevorzugt die gesamte zusammenhängende Trägerfläche an der Sichtseite des Trägers. Erfindungsgemäß kann auch vorgesehen sein, dass die zusammenhängende Trägerfläche an einer Außenseite oder an einer Vorderseite des Trägers ausgebildet ist. Die Dekorfolie ist hierbei an der zweiten Teilfläche, die von Folienmaterial unbedeckt ist, angebracht, einhergehend mit den bereits oben dargelegten optischen Vorteilen bei Betrachtung des Dekorprofils.

Bei einer praktischen Weiterbildung besteht das Funktionselement aus Kunststoffmaterial und weist eine Verbindungsfläche auf, wobei die Verbindungsfläche wenigstens abschnittsweise stoffschlüssig mit der zweiten Teilfläche verbunden ist, einhergehend mit einer festen und stabilen Verbindung.

Bevorzugt sind die zweite Teilfläche und die Verbindungsfläche länglich ausgebildet, wobei die zweite Teilfläche eine größte Breite aufweist, die kleiner oder größer ist als eine größte Breite der Verbindungsfläche oder dieser im Wesentlichen entspricht. Besonders bevorzugt sind die zweite Teilfläche und die Verbindungsfläche im Wesentlichen eben und rechteckförmig ausgebildet, wobei die zweite Teilfläche eine Breite aufweist, die kleiner oder größer ist als die Breite der Verbindungsfläche oder dieser im Wesentlichen entspricht, und wobei die Längsseite der Verbindungsfläche im Wesentlichen parallel zu der Längsseite der zweiten Teilfläche ist. Mittels diesen bevorzugten Ausbildungen der Verbindungsfläche und der zweiten Teilfläche sind die bereits oben dargelegten vorteilhaften Gestaltungen (dort im Zusammenhang mit dem erfindungsgemäßen unbedeckten Flächenbereich und der erfindungsgemäßen Verbindungsfläche) des erfindungsgemäßen Dekorprofils möglich.

Das Funktionselement kann beispielsweise ein Dichtelement aus Kunststoffmaterial sein. Das Folienmaterial der Dekorfolie kann Metall, vorzugsweise Aluminium, oder Kunststoff oder Holz oder WPC-Material aufweisen. WPC ist eine bekannte Abkürzung für "Wood Plastic Composites" bzw. "Wood Polymer Composites). WPC-Materialien sind thermoplastisch verarbeitbare Verbundwerkstoffe, die aus unterschiedlichen Anteilen von Holz, Kunststoffen und Additiven bestehen. WPC-Materialien zeichnen sich dadurch aus, dass sie gegenüber Vollkunststoffen eine höhere Steifigkeit und einen deutlich geringeren thermischen Ausdehnungskoeffizienten aufweisen. Sie weisen ferner eine hohe Feuchteresistenz auf und lassen sich gut durch thermoplastische Formgebungsverfahren verarbeiten.

Bei einer besonders praktischen Weiterbildung ist der Träger streifenförmig ausgebildet, einhergehend mit der Bereitstellung von streifenförmigen Dekorprofilen mit daran angebrachten Funktionselementen, die vielfältig als Dekorprofile von Duschkabinen verwendbar sind.

### Kurzbeschreibung der Zeichnung

Nachfolgend werden Ausführungsbeispiele der Erfindung anhand der beigefügten Zeichnungen näher erläutert. Es zeigt
- Fig. 1: drei schematische Schnitt-Darstellungen erfindungsgemäßer Dekorprofile ohne angebrachte Funktionselemente,
- Fig. 2: eine schematische Schnitt-Darstellung eines Ausführungsbeispiels eines erfindungsgemäßen Dekorprofils mit zwei angebrachten Funktionselementen, und
- Fig. 3: eine schematische Schnitt-Darstellung eines weiteren Ausführungsbeispiels eines erfindungsgemäßen Dekorprofils mit einem angebrachten Funktionselement.

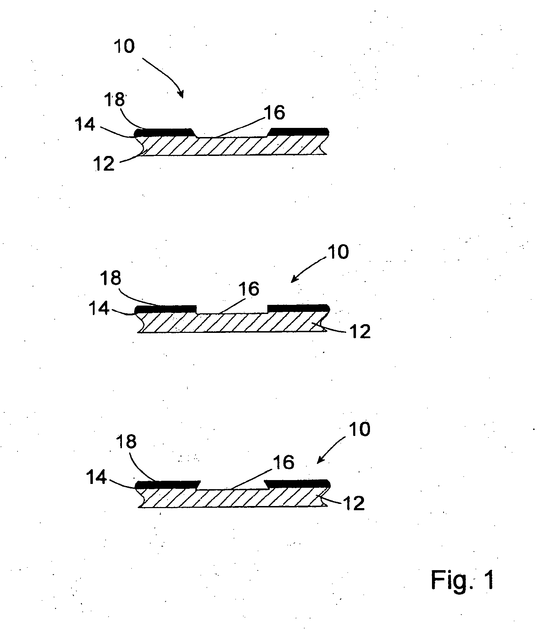

Alle in Fig. 1 schematisch dargestellten Dekorprofile 10 umfassen einen Träger 12 in Form einer Polymerschicht mit einer ebenen Trägerfläche 14, die, abgesehen von einem unbedeckten Flächenbereich 16, mit einer Dekorfolie 18 aus Metall bedeckt ist, die eine Dicke aufweisen kann, die 0,1 mm bis 1 mm betragen kann. Der unbedeckte Flächenbereich 16 ist erfindungsgemäß dafür vorgesehen, dass an ihm wenigstens ein Funktionselement (hier nicht dargestellt), wie z.B. eine Dichtlippe aus Kunststoffmaterial, angebracht wird, vorzugsweise derart, dass die Dichtlippe in wenigstens abschnittsweise schmelzflüssigem Zustand an den unbedeckten Flächenbereich angelegt wird, um die Dichtlippe mit diesem stoffschlüssig zu verbinden. Zur Bildung der von Folienmaterial unbedeckten Flächenbereiche 16 wurden zusammenhängende Stücke der Dekorfolie 18 entfernt, die zuvor mit der Polymerschicht 12 flächig verbunden waren und die eine sich in Richtung der Polymerschicht konisch verjüngende Querschnitts-Form (vgl. obere Schnitt-Darstellung), eine rechteckförmige Querschnitts-Form (vgl. untere Schnitt-Darstellung), bzw. eine in Richtung der Polymerschicht konisch erweiternde Querschnitts-Form aufweisen können. Die Entfernung des zusammenhängenden Stücks bzw. die Unterbrechung der Dekorfolie 18 kann erfindungsgemäß durch Sägen, Fräsen, Ziehen oder Lasern bis zu dem Träger 12, vorliegend in Form der Polymerschicht 12, erfolgen. Die Breite, Form und Tiefe der Unterbrechung bzw. des entfernten zusammenhängenden Stücks der Dekorfolie 18 können, wie in Fig. 1 beispielhaft dargestellt, variabel gestaltet sein.

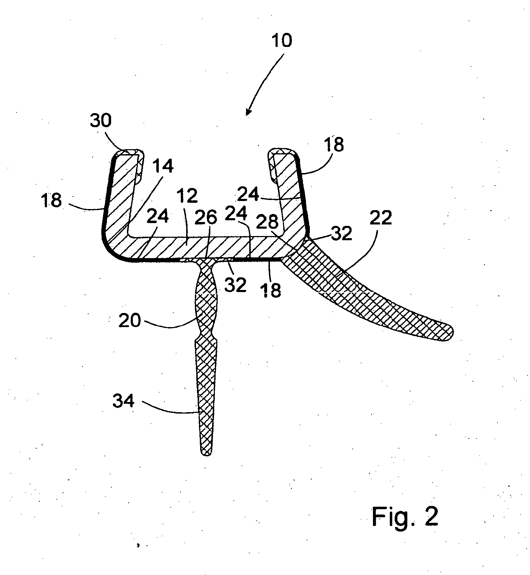

Fig. 2 zeigt eine schematische Schnitt-Darstellung eines Ausführungsbeispiels eines erfindungsgemäßen Dekorprofils 10 mit zwei angebrachten Funktionselementen 20, 22. Das dargestellte Dekorprofil 10 ist vorliegend in Form einer Abschlussleiste für eine Duschkabinentür ausgebildet, umfassend einen Träger 12 aus einem harten PVC-Material mit einer im Wesentlichen U-förmigen Querschnittsform, eine zusammenhängende Trägerfläche 14 an einer Sichtseite des Trägers 12, die drei Teilflächen 24 aufweist, die jeweils mit einer Rückseite einer Dekorfolie 18 aus Metall, vorzugsweise Aluminium flächig verbunden und mit der Dekorfolie 18 bedeckt sind, und die zwei Teilflächen 26, 28 aufweist, die von Folienmaterial unbedeckt sind. Randbereiche des Trägers sind mit einem weichen KunststoffMaterial 30 (z.B. PVC mit z.B. Shore 75) bedeckt, das an Folienmaterial angrenzt. Die erste unbedeckte Teilfläche 26 ist flächig und stoffschlüssig mit einer Verbindungsfläche 32 des Funktionselements 20, das in Form einer Dichtlippe 20 aus vorzugsweise weichem Kunststoffmaterial (z.B. PVC mit z.B. Shore 75) ausgebildet ist, verbunden. Ein Endabschnitt 34 der erfindungsgemäßen Dichtlippe 20 weist bei geschlossener Duschkabinentür Kontakt zu einem Türrahmen der Duschkabine auf, um ein Austreten von Spritzwasser aus der Duschkabine zu vermeiden.

Die Dichtlippe 20 grenzt unmittelbar an die Dekorfolien 18 bzw. das Folienmaterial an, einhergehend mit einem optisch sehr ansprechenden Übergang zwischen Folienmaterial und Dichtlippe 20. Erfindungsgemäß wird der Blick eines Betrachters auf die Vorderseite bzw. die Sichtseite der Dekorfolien 18 nicht durch optische Hindernisse gestört, einhergehend mit der Bereitstellung einer "Echt-Aluminiumoberflächen"-Optik bzw. einer "Echt-Metalloberflächen"-Optik. Ganz im Unterschied zu bekannten Lösungen, bei denen auf der Sichtseite von Dekorfolien eine zwar durchsichtige, aber insbesondere infolge von erforderlichem Haftungslack eingetrübte Trägerschicht aufgebracht ist, an der mindestens ein Funktionselement angebracht ist.

Die zweite unbedeckte Teilfläche 28 ist flächig und stoffschlüssig mit einer Verbindungsfläche 32 des Funktionselements 22 in Form einer Dicht- bzw. Abstreiflippe verbunden.

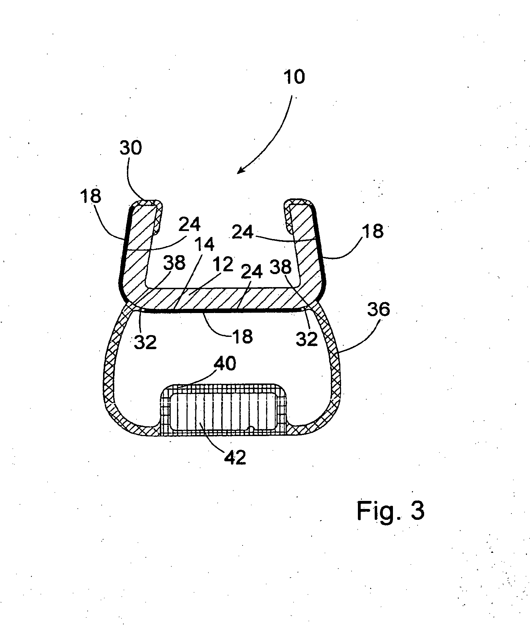

Fig. 3 zeigt eine schematische Schnitt-Darstellung eines weiteren Ausführungsbeispiels eines erfindungsgemäßen Dekorprofils 10 in Form einer Abschlussleiste für eine Duschkabinentür, wobei ein Funktionselement 36, das in Form eines Dichtelements 36 aus vorzugsweise weichem Kunststoffmaterial (z.B. PVC mit z.B. Shore 75) mit im Wesentlichen U-förmigem Querschnitt ausgebildet ist, über zwei Verbindungsflächen 32 stoffschlüssig mit zwei von Folienmaterial unbedeckten Teilflächen 38 der Trägerfläche 14 des Trägers 12 verbunden ist. An dem Dichtelement 36 ist ferner eine Aufnahme 40 aus vorzugsweise weichem Kunststoffmaterial (z.B. PVC mit z.B. Shore 75) angeformt, in der ein Magnet 42 aufgenommen ist. Der Magnet 42 ist zur Herstellung einer magnetisch haftenden Verbindung mit einem weiteren Magneten vorgesehen, der z.B. an einem Türrahmen einer Duschkabine angebracht sein kann, um die Duschkabinentür lösbar an dem Türrahmen zu arretieren.

### Bezugszeichenliste

- 10: Dekorprofil
- 12: Träger
- 14: Trägerfläche
- 16: unbedeckter Flächenbereich
- 18: Dekorfolie
- 20: Funktionselement
- 22: Funktionselement
- 24: Teilfläche
- 26: Teilfläche
- 28: Teilfläche
- 30: PVC-Material
- 32: Verbindungsfläche
- 34: Endabschnitt
- 36: Funktionselement
- 38: Teilfläche
- 40: Aufnahme
- 42: Magnet

## Patentansprüche

1. Verfahren zur Herstellung eines Dekorprofils (10), an dem wenigstens ein Funktionselement (20, 22, 36) angebracht ist, bei dem
in einem ersten Schritt eine Rückseite wenigstens einer Dekorfolie (18) aus Folienmaterial mit einem Träger (12) aus Kunststoffmaterial in Kontakt gebracht und mit diesem flächig verbunden wird,
in einem zweiten Schritt wenigstens ein zusammenhängendes Stück der Dekorfolie (18) entfernt wird, um wenigstens einen von Folienmaterial unbedeckten Flächenbereich (16, 26, 28, 38) des Trägers (12) auszubilden, und
in einem dritten Schritt das Funktionselement (20, 22, 36) an dem unbedeckten Flächenbereich (16, 26, 28, 38) angebracht wird.

2. Verfahren nach Anspruch 1, **dadurch gekennzeichnet, dass** das Funktionselement (20, 22, 36) aus Kunststoffmaterial besteht und eine Verbindungsfläche (32) aufweist, wobei die Verbindungsfläche (32) wenigstens abschnittsweise an den unbedeckten Flächenbereich (16, 26, 28, 38) angelegt wird, und wobei während des Anlegens der Verbindungsfläche (32) wenigstens ein Abschnitt des Funktionselements (20, 22, 36), an dem die Verbindungsfläche (32) ausgebildet ist, einen schmelzflüssigen Zustand aufweist, um das Funktionselement (20, 22, 36) mit dem unbedeckten Flächenbereich (16, 26, 28, 38) stoffschlüssig zu verbinden.

3. Verfahren nach Anspruch 2, **dadurch gekennzeichnet, dass** der unbedeckte Flächenbereich (16, 26, 28, 38) und die Verbindungsfläche (32) länglich ausgebildet sind, wobei der unbedeckte Flächenbereich (16, 26, 28, 38) eine größte Breite aufweist, die kleiner oder größer ist als eine größte Breite der Verbindungsfläche (32) oder dieser im Wesentlichen entspricht.

4. Verfahren nach Anspruch 2, **dadurch gekennzeichnet, dass** der unbedeckte Flächenbereich (16, 26, 28, 38) und die Verbindungsfläche (32) im Wesentlichen eben und rechteckförmig ausgebildet sind, wobei der unbedeckte Flächenbereich (16, 26, 28, 38) eine Breite aufweist, die kleiner oder größer ist als die Breite der Verbindungsfläche (32) oder dieser im Wesentlichen entspricht, und wobei nach dem Verbinden des Funktionselements (20, 22, 36) mit dem unbedeckten Flächenbereich (16, 26, 28, 38) die Längsseite der Verbindungsfläche (32) im Wesentlichen parallel zu der Längsseite des unbedeckten Flächenbereichs (16, 26, 28) ist.

5. Verfahren nach einem der vorangehenden Ansprüche, **dadurch gekennzeichnet, dass** sich der unbedeckte Flächenbereich (16, 26, 28, 38) von einem Rand des Trägers (12) bis zu einem anderen Rand der Trägers (12) erstreckt.

6. Verfahren nach einem der vorangehenden Ansprüche, **dadurch gekennzeichnet, dass** das Kunststoffmaterial des Trägers (12) in flüssiger Form auf der Rückseite der Dekorfolie (18) verteilt und anschließend ausgehärtet wird.

7. Duschkabinen-Dekorprofil (10), an dem wenigstens ein Funktionselement (20, 22, 36) angebracht ist, mit einem Träger (12) aus Kunststoffmaterial, wobei der Träger (12) an einer Sichtseite des Trägers (12) eine zusammenhängende Trägerfläche (14) aufweist, die wenigstens eine erste zusammenhängende Teilfläche (24) aufweist, die mit einer Rückseite wenigstens einer Dekorfolie (18) aus Folienmaterial flächig verbunden und mit der Dekorfolie (18) bedeckt ist, und wenigstens eine zweite zusammenhängende Teilfläche (26, 28, 38) aufweist, die von Folienmaterial unbedeckt ist, und wobei das Funktionselement (20, 22, 36) an der zweiten Teilfläche (26, 28, 38) angebracht ist.

8. Duschkabinen-Dekorprofil (10) nach Anspruch 7, **dadurch gekennzeichnet, dass** das Funktionselement (20, 22, 36) aus Kunststoffmaterial besteht und eine Verbindungsfläche (32) aufweist, wobei die Verbindungsfläche (32) wenigstens abschnittsweise stoffschlüssig mit der zweiten Teilfläche (26, 28, 38) verbunden ist.

9. Duschkabinen-Dekorprofil (10) nach Anspruch 8, **dadurch gekennzeichnet, dass** die zweite Teilfläche (26, 28) und die Verbindungsfläche (32) länglich ausgebildet sind, wobei die zweite Teilfläche (26, 28, 38) eine größte Breite aufweist, die kleiner oder größer ist als eine größte Breite der Verbindungsfläche (32) oder dieser im Wesentlichen entspricht.

10. Duschkabinen-Dekorprofil (10) nach Anspruch 8, **dadurch gekennzeichnet, dass** die zweite Teilfläche (26, 28, 38) und die Verbindungsfläche (32) im Wesentlichen eben und rechteckförmig ausgebildet sind, wobei die zweite Teilfläche (26, 28, 38) eine Breite aufweist, die kleiner oder größer ist als die Breite der Verbindungsfläche (32) oder dieser im Wesentlichen entspricht, und wobei die Längsseite der Verbindungsfläche (32) im Wesentlichen parallel zu der Längsseite der zweiten Teilfläche (26, 28, 38) ist.

11. Duschkabinen-Dekorprofil (10) nach einem der vorangehenden Ansprüche, **dadurch gekennzeichnet, dass** das Funktionselement (20, 22, 36) ein Dichtelement aus Kunststoffmaterial ist.

12. Duschkabinen-Dekorprofil (10) nach einem der vorangehenden Ansprüche, **dadurch gekennzeichnet, dass** das Folienmaterial Metall, vorzugsweise Aluminium, oder Kunststoff oder Holz oder WPC-Material aufweist.

13. Duschkabinen-Dekorprofil (10) nach einem der vorangehenden Ansprüche, **dadurch gekennzeichnet, dass** der Träger (12) streifenförmig ausgebildet ist.

## Claims

1. Method for producing a decorative profile (10) to which at least one functional element (20, 22, 36) is fixed, in which
in a first step, a rear side of at least one decorative film (18) made of film material is brought into contact with a carrier (12) made of plastic material and is connected flat to the latter,
in a second step, at least one coherent piece of the decorative film (18) is removed, in order to form at least one surface region (16, 26, 28, 38) of the carrier (12) that is not covered by film material, and
in a third step, the functional element (20, 22, 36) is fixed to the uncovered surface region (16, 26, 28, 38).

2. Method according to Claim 1, **characterized in that** the functional element (20, 22, 36) consists of plastic material and has a connecting area (32), wherein at least some sections of the connecting area (32) are laid on the uncovered surface region (16, 26, 28, 38), and wherein, as the connecting area (32) is laid on, at least one section of the functional element (20, 22, 36) on which the connecting area (32) is formed has a molten state, in order to connect the functional element (20, 22, 36) integrally to the uncovered surface region (16, 26, 28, 38).

3. Method according to Claim 2, **characterized in that** the uncovered surface region (16, 26, 28, 38) and the connecting area (32) are of elongated form, wherein the uncovered surface region (16, 26, 28, 38) has a greatest width which is smaller or larger than a greatest width of the connecting area (32) or substantially corresponds to the latter.

4. Method according to Claim 2, **characterized in that** the uncovered surface region (16, 26, 28, 38) and the connecting area (32) are formed so as to be substantially flat and rectangular, wherein the uncovered surface region (16, 26, 28, 38) has a width which is smaller or larger than the width of the connecting area (32) or substantially corresponds to the latter, and wherein, following the connection of the functional element (20, 22, 36) to the uncovered surface region (16, 26, 28, 38), the long side of the connecting area (32) is substantially parallel to the long side of the uncovered surface region (16, 26, 28).

5. Method according to one of the preceding claims, **characterized in that** the uncovered surface region (16, 26, 28, 38) extends from one edge of the carrier (12) as far as another edge of the carrier (12).

6. Method according to one of the preceding claims, **characterized in that** the plastic material of the carrier (12) is distributed in liquid form on the rear side of the decorative film (18) and is subsequently hardened.

7. Shower cabin decorative profile (10) to which at least one functional element (20, 22, 36) is fixed, having a carrier (12) made of plastic material, wherein, on a visible side of the carrier (12), the carrier (12) has a coherent carrier area (14) which has at least one first coherent sub-area (24) which is connected flat to a rear side of at least one decorative film (18) made of film material and is covered with the decorative film (18), and has at least one second coherent sub-area (26, 28, 38) which is not covered by film material, and wherein the functional element (20, 22, 36) is fixed to the second sub-area (26, 28, 38).

8. Shower cabin decorative profile (10) according to Claim 7, **characterized in that** the functional element (20, 22, 36) consists of plastic material and has a connecting area (32), wherein at least some sections of the connecting area (32) are integrally connected to the second sub-area (26, 28, 38).

9. Shower cabin decorative profile (10) according to Claim 8, **characterized in that** the second sub-area (26, 28) and the connecting area (32) are of elongated form, wherein the second sub-area (26, 28, 38) has a greatest width which is smaller or larger than a greatest width of the connecting area (32) or substantially corresponds to the latter.

10. Shower cabin decorative profile (10) according to Claim 8, **characterized in that** the second sub-area (26, 28, 38) and the connecting area (32) are formed so as to be substantially flat and rectangular, wherein the second sub-area (26, 28, 38) has a width which is smaller or larger than the width of the connecting area (32) or substantially corresponds to the latter, and wherein the long side of the connecting area (32) is substantially parallel to the long side of the second sub-area (26, 28, 38).

11. Shower cabin decorative profile (10) according to one of the preceding claims, **characterized in that** the functional element (20, 22, 36) is a sealing element made of plastic material.

12. Shower cabin decorative profile (10) according to one of the preceding claims, **characterized in that** the film material has metal, preferably aluminium, or plastic or wood or WPC material.

13. Shower cabin decorative profile (10) according to one of the preceding claims, **characterized in that** the carrier (12) is of strip-like form.

## Revendications

1. Procédé de fabrication d'un profilé décoratif (10) sur lequel au moins un élément fonctionnel (20, 22, 36) est placé, et dans lequel
dans une première étape, la face arrière d'au moins une feuille décorative (18) en matériau en feuille est mise en contact avec un support (12) en matière synthétique et est reliée à ce dernier sur toute sa surface,
dans une deuxième étape, au moins une partie continue de la feuille décorative (18) est enlevée de telle sorte qu'au moins une partie de surface (16, 26, 28, 38) du support (12) ne soit pas couverte par le matériau en feuille et
dans une troisième étape, l'élément fonctionnel (20, 22, 36) est placé sur la partie non couverte (16, 26, 28, 38) de la surface.

2. Procédé selon la revendication 1, **caractérisé en ce que** l'élément fonctionnel (20, 22, 36) est réalisé en matière synthétique et présente une surface de liaison (32), la surface de liaison (32) étant placée au moins en partie sur la partie (16, 26, 28, 38) de surface non couverte, au moins une partie de l'élément fonctionnel (20, 22, 36) sur lequel la surface de liaison (32) est formée présentant un état fondu liquide pendant l'application de la surface de liaison (32) pour relier l'élément fonctionnel (20, 22, 36) en correspondance de matière à la partie (16, 26, 28, 38) de surface non couverte.

3. Procédé selon la revendication 2, **caractérisé en ce que** la partie (16, 26, 28, 38) de surface non couverte et la surface de liaison (32) sont allongées, la partie (16, 26, 28, 38) de surface non couverte présentant une plus grande largeur qui est plus petite ou plus grande que la plus grande largeur de la surface de liaison (32) ou qui lui correspond essentiellement.

4. Procédé selon la revendication 2, **caractérisé en ce que** la partie (16, 26, 28, 38) de surface non couverte et la surface de liaison (32) sont essentiellement planes et rectangulaires, la partie (16, 26, 28, 38) de surface non couverte présentant une largeur inférieure ou supérieure à la largeur de la surface de liaison (32) ou correspondant essentiellement à cette dernière, et **en ce qu'**après la liaison de l'élément fonctionnel (20, 22, 36) à la partie (16, 26, 28, 38) de surface non couverte, le côté longitudinal de la surface de liaison (32) est essentiellement parallèle au côté longitudinal de la partie (16, 26, 28) de surface non couverte.

5. Procédé selon l'une des revendications précédentes, **caractérisé en ce que** la partie (16, 26, 28, 38) de surface non couverte s'étend depuis un bord du support (12) jusqu'à un autre bord du support (12).

6. Procédé selon l'une des revendications précédentes, **caractérisé en ce que** la matière synthétique du support (12) est répartie sous forme liquide sur le côté arrière de la feuille décorative (18) et est ensuite durcie.

7. Profilé décoratif (10) pour cabine de douche sur lequel au moins un élément fonctionnel (20, 22, 36) est placé, et présentant un support (12) en matière synthétique, le support (12) présentant sur un côté visible du support (12) une surface de support d'un seul tenant (14) qui présente au moins une première surface partielle (24) d'un seul tenant qui est reliée sur toute sa surface au côté arrière d'au moins une feuille décorative (18) en matériau en feuille et est recouverte par la feuille décorative (18), et au moins une deuxième surface partielle (26, 28, 38) d'un seul tenant qui n'est pas recouverte par le matériau en feuille, l'élément fonctionnel (20, 22, 36) étant placé sur la deuxième surface partielle (26, 28, 38).

8. Profilé décoratif (10) pour cabine de douche selon la revendication 7, **caractérisé en ce que** l'élément fonctionnel (20, 22, 36) est réalisé en matière synthétique et présente une surface de liaison (32), la surface de liaison (32) étant reliée au moins par parties en correspondance de matière à la deuxième surface partielle (26, 28, 38).

9. Profilé décoratif (10) pour cabine de douche selon la revendication 8, **caractérisé en ce que** la deuxième surface partielle (26, 28) et la surface de liaison (32) sont allongées, et **en ce que** la deuxième surface partielle (26, 28, 38) a une plus grande largeur inférieure ou plus grande que la plus grande largeur de la surface de liaison (32) ou correspond essentiellement à cette dernière.

10. Profilé décoratif (10) pour cabine de douche selon la revendication 8, **caractérisé en ce que** la deuxième surface partielle (26, 28, 38) et la surface de liaison (32) sont essentiellement planes et rectangulaires, et **en ce que** la deuxième surface partielle (26, 28, 38) a une plus grande largeur inférieure ou plus grande que la plus grande largeur de la surface de liaison (32) ou correspond essentiellement à cette dernière, le côté longitudinal de la surface de liaison (32) étant essentiellement parallèle au côté longitudinal de la deuxième surface partielle (26, 28, 38) de surface non couverte.

11. Profilé décoratif (10) pour cabine de douche selon l'une des revendications précédentes, **caractérisé en ce que** l'élément fonctionnel (20, 22, 36) est un élément d'étanchéité en matière synthétique.

12. Profilé décoratif (10) pour cabine de douche selon l'une des revendications précédentes, **caractérisé en ce que** le matériau en feuille présente un métal, en particulier de l'aluminium, une matière synthétique, du bois ou un matériau WPC.

13. Profilé décoratif (10) pour cabine de douche selon l'une des revendications précédentes, **caractérisé en ce que** le support (12) est en forme de ruban.
